# FASCICULE DE BREVET EUROPEEN

(11) **EP 3 627 659 B1**
(45) Date de publication et mention de la délivrance du brevet: **27.12.2023**
(21) Numéro de dépôt: 19197955.8
(22) Date de dépôt: 18.09.2019
(51) Int. Cl.: H02K 1/22, H02K 1/28, H02K 7/00, H02K 17/16, H02K 15/00

(54) **ROTOR POUR MACHINE ELECTRIQUE ASYNCHRONE A ARBRE NON TRAVERSANT**
ROTOR FÜR ASYNCHRONE ELEKTRISCHE MASCHINE MIT NICHT DURCHGEHENDER WELLE
ROTOR FOR ASYNCHRONOUS ELECTRIC MACHINE WITH NON-THROUGH SHAFT

(30) Priorité: 19.09.2018 FR 1858468
(43) Date de publication de la demande: 25.03.2020
(73) Titulaire: GE Energy Power Conversion Technology Ltd, RUGBY, Warwickshire CV21 1BD (GB)
(72) Inventeur: GALMICHE, Christophe, 54200 TOUL (FR); MULLER, Remy, 90000 BELFORT (FR); VELLY, Nicolas, 54390 FROUARD (FR)
(74) Mandataire: Casalonga

(56) Documents cités:
- EP-A1- 0 609 645
- EP-A1- 3 048 703
- EP-A2- 1 102 384
- EP-B1- 0 609 645
- DE-A1- 2 238 755
- DE-C- 920 139
- GB-A- 364 027
- GB-A- 523 311

## Description

La présente invention concerne les machines électriques tournantes asynchrones à cage d'écureuil et se rapporte plus particulièrement à un dispositif de blocage de tôles incorporées dans un rotor de la machine comprenant un arbre non traversant.

La présente invention concerne également une machine électrique tournante comprenant un tel rotor.

Généralement un rotor d'une machine électrique tournante asynchrone comprend un rotor feuilleté destiné à fonctionner à des vitesses de rotation élevées, notamment jusqu'à une vitesse périphérique de 300 m/s, et comprend un arbre non-traversant de sorte que les tôles magnétiques du rotor ne comportent pas d'évidement en leur centre afin de minimiser les contraintes mécaniques qui, dans le cas d'un rotor comprenant un arbre traversant, se concentrent autour de l'évidement et sont susceptibles d'endommager les tôles du circuit magnétique.

Le document EP0609645 décrit un rotor feuilleté comprenant un arbre non traversant pour un moteur électrique asynchrone.

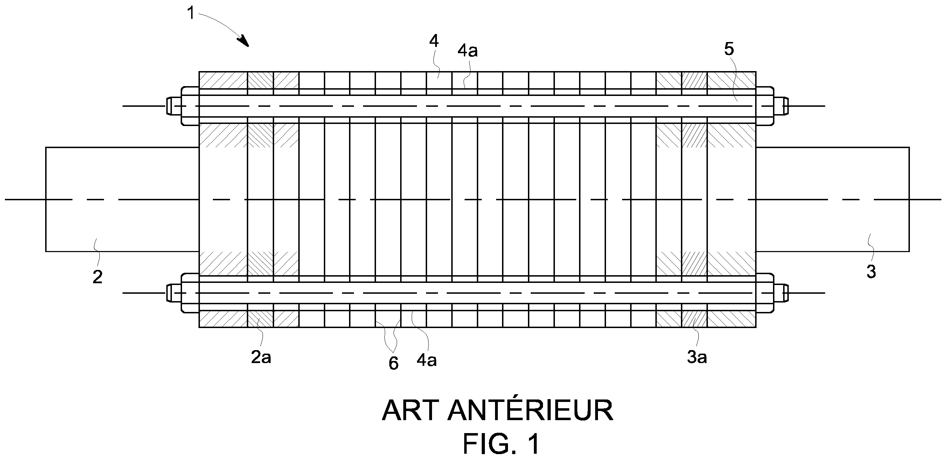

On se réfère à la figure 1 qui représente une coupe d'un tel rotor 1 selon une direction axiale.

Le rotor comprend deux demi-arbres 2 et 3 entre lesquels sont insérées des tôles magnétiques 4 maintenues compactées par des tirants 5 reliant les deux demi-arbres 2 et 3.

Les tôles magnétiques 4 forment la masse magnétique du rotor.

Le rotor 1 comprend respectivement des couronnes ou disques de court-circuit 2a et 3a reliant des barres conductrices (non représentées), par exemple en cuivre, formant une cage d'écureuil.

Chaque tôle magnétique 4 comprend des trous 4a dans lesquels sont insérés les tirants 5 et a une épaisseur généralement comprise entre un dixième de millimètre et un millimètre.

Chaque tôle 4 est enduite d'une couche de vernis d'isolation 6 empêchant un contact électrique entre des tôles adjacentes de manière à minimiser les pertes par courant de Foucault et augmenter le rendement du moteur.

Les trous 4a sont dimensionnés de sorte que les tirants 5 puissent être insérés dans les trous 4a de l'ensemble des tôles 4 empilées lors de la construction du rotor et de sorte qu'un jeu subsiste pour absorber l'augmentation du diamètre des tirants sous l'effet de la chaleur lors du fonctionnement du rotor.

Les tôles magnétiques 4 sont maintenues entre elles par adhérence de cisaillement sous l'effet du compactage des tôles, de la présence de rugosité sur la surface des tôles magnétiques et du vernis d'isolation électrique.

Cependant, lors du démarrage et de l'arrêt du moteur, celuici passe par une vitesse de rotation critique en flexion correspondant au premier mode propre du rotor.

Lorsque la vitesse de rotation critique en flexion est atteinte, le rotor fléchit et vibre.

De plus, lors du fonctionnement du moteur, le rotor est soumis à des vibrations, des chocs et des échauffements thermiques.

Par ailleurs, la machine électrique tournante asynchrone peut être utilisée dans un environnement chimiquement agressif entraînant la détérioration du vernis recouvrant les tôles magnétiques, par exemple lorsque la machine électrique est utilisée et incorporée dans un motocompresseur.

Dans cette application, le rotor est refroidi par le gaz contenant des impuretés et/ou des composants chimiques agressifs détériorant le vernis avant sa compression et susceptible d'endommager les tôles magnétiques.

Ces phénomènes sont susceptibles de provoquer un glissement radial des tôles entraînant un jeu radial J entre les tôles magnétiques.

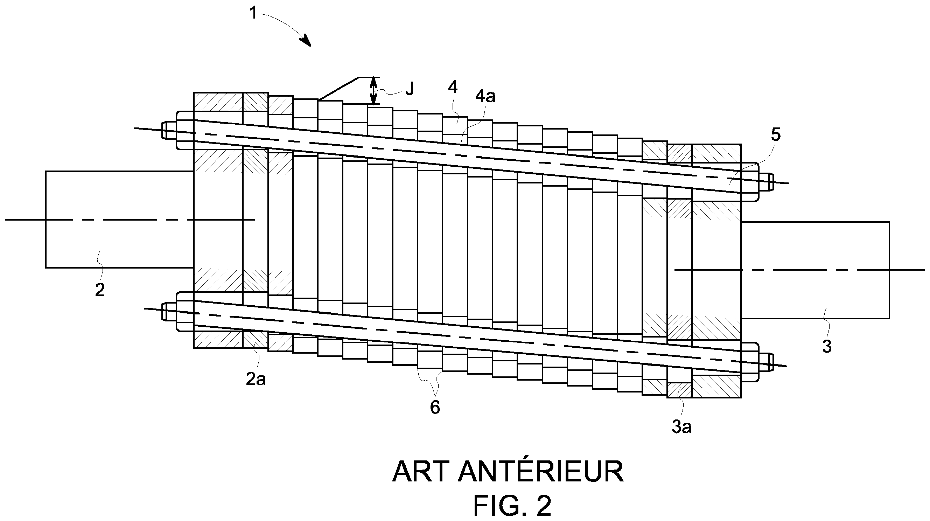

Les deux demi-arbres ne sont plus coaxiaux comme représenté à la figure 2 provoquant de fortes vibrations du rotor pouvant entraîner un arrêt d'urgence, voir la destruction du rotor.

On pourra se référer aux documents US2003098627, EP0225440, US20110169355 et US20160186603 qui divulguent un rotor monobloc pour une machine électrique asynchrone comprenant un arbre et une masse magnétique usinés dans un même bloc de matière.

Cependant un tel rotor requiert des opérations d'usinage coûteuses en temps et en matière brute.

De plus un tel rotor ne peut pas être démonté, notamment pour son transport et sa manutention, rendant toute opération de remplacement par exemple d'un demi-arbre impossible.

Le document DE19956042 divulgue un rotor avec un arbre non traversant pour une machine électrique tournante asynchrone comprenant une masse magnétique formée par un empilement de plaques métalliques compactées entre deux demi-arbres.

Les plaques métalliques ont une épaisseur supérieure à celle des tôles magnétiques. Les plaques sont moins sujettes aux agressions chimiques.

Cependant les tôles sont maintenues par adhérence.

Sous l'effet de la force centrifuge ou de chocs et vibrations, les tôles peuvent se déplacer selon une direction radiale.

Le document DE573512 divulgue un rotor pour un turbogénérateur comportant une masse magnétique formée de plaques métalliques empilées et soudées entre elles.

Chaque tôle comporte un pion s'étendant en saillie à partir d'une première face et une cavité formée dans une seconde face, le pion et la cavité coopérant respectivement avec une cavité et un pion des tôles adjacentes.

Cependant, ce rotor n'est pas adapté pour une machine électrique tournante asynchrone.

De plus, le maintien du circuit magnétique est assuré par le soudage des plaques métalliques entre elles, et non par compactage entre deux demi-arbres à l'aide de tirants ou de vis.

Le document EP0509119 divulgue un rotor pour une machine électrique tournante asynchrone comprenant une masse magnétique formée par un empilement de tôles soudées.

Cependant les tôles sont traversées par un arbre.

Les documents JPH104658 et WO2018037486 divulguent un rotor pour une machine électrique tournante asynchrone comprenant une masse magnétique monobloc traversée par un arbre.

Dans le document US6566778, un rotor pour une machine électrique asynchrone est formé d'un arbre sur lequel sont insérés des éléments en cuivre de manière à former une cage d'écureuil par un procédé du type compression isostatique à chaud.

Un tel procédé est coûteux et nécessite une étuve pour la réalisation du rotor.

Les étuves ne sont pas adaptées pour des rotors de grande dimension, par exemple d'un mètre de diamètre extérieur et de six mètres de longueur.

De plus, un tel rotor n'est pas démontable en plusieurs parties puisqu'il est monobloc.

Il est donc proposé de pallier les inconvénients des rotors monobloc ou à une masse magnétique monobloc ou comprenant des empilements de plaques métalliques.

Au vu de ce qui précède il est proposé, selon un aspect, un rotor pour machine électrique asynchrone à arbre non traversant selon la revendication 1 et comprenant deux demi-arbres enserrant une masse magnétique cylindrique et deux disques de court-circuit intercalés chacun entre un demi-arbre et une des extrémités de la masse magnétique cylindrique.

Chaque demi-arbre comprend au moins un premier moyen de retenue, chaque disque de court circuit comprend sur chacune de ses faces au moins un deuxième moyen de retenue et chaque extrémité de la masse magnétique comprend au moins un troisième moyen de retenue, les premier, deuxième et troisième moyens de retenue coopérant entre eux de manière à empêcher un déplacement relatif des disques de court circuit par rapport aux demi-arbres et par rapport à la masse magnétique.

On empêche ainsi, ou on limite le glissement radial des tôles dans le rotor et de sorte que le rotor soit démontable.

Selon un mode réalisation, des tirants sont répartis uniformément sur au moins un diamètre du rotor de manière à maintenir compacté la masse magnétique et les disques de court-circuit entre les demi-arbres.

Selon un autre mode de réalisation, des vis sont réparties uniformément sur un diamètre des demi-arbres passant à travers les disques de court-circuit et en prise dans la masse magnétique de sorte que les demi-arbres enserrent les disques de court-circuit et la masse magnétique.

De préférence, les premier, deuxième et troisième moyens de retenue sont disposés au centre du disque de court-circuit, du demi-arbre et de la masse magnétique.

Avantageusement, les premier, deuxième et troisième moyens de retenue sont disposés uniformément ou sensiblement répartis de manière uniforme sur un même diamètre du disque de court-circuit, du demi-arbre et de la masse magnétique.

Le rotor de l'invention est caractérisé par l'une des alternatives suivantes portant sur la réalisation des moyens de retenue.

Selon une première alternative, le premier moyen de retenue et le troisième moyen de retenue comprennent chacun un lamage et le deuxième moyen de retenue comprend un pion de retenue destiné à s'insérer dans le lamage.

Avantageusement, le disque de court-circuit et le pion de retenue sont évidés en leur centre.

Selon une deuxième alternative, le premier moyen de retenue et le troisième moyen de retenue comprennent chacun un pion de retenue et le deuxième moyen de retenue comprend un lamage destiné à accueillir le pion de retenue.

Selon une troisième alternative, le premier moyen de retenue comprend un pion de retenue, le troisième moyen de retenue comprend un lamage, le deuxième moyen de retenue d'une première face du disque de court-circuit comprend un lamage et le deuxième moyen de retenue d'une deuxième face du disque de court circuit comprend un pion de retenue de sorte que chaque pion de retenue s'insère dans un lamage adjacent.

Selon une quatrième alternative, le rotor comprend en outre au moins un pion de retenue amovible, le premier, le deuxième et le troisième moyens de retenue comprenant chacun un lamage coopérant avec le pion de retenue amovible.

Selon une cinquième alternative, le rotor comprend en outre au moins un pion de retenue amovible, et le premier moyen de retenue comprend un trou borgne pratiqué dans le demi-arbre, le deuxième moyen de retenue comprend un trou pratiqué dans le disque de court-circuit de sorte que le disque de court-circuit soit traversé par le trou et le troisième moyen de retenue comprend un trou pratiqué dans la masse magnétique de sorte que la masse magnétique soit traversée par le trou, le pion de retenue amovible s'insérant avec ou sans jeu dans les trous.

Avantageusement, le pion de retenue ou le pion de retenue amovible est circulaire de forme cylindrique ou conique, ou polygonal, de préférence carré, triangulaire ou carré surmonté d'un triangle.

Selon un autre mode de réalisation, la masse magnétique comprend un corps métallique monobloc.

Selon encore un autre mode de réalisation, la masse magnétique comprend un empilement de plaques métalliques, chaque plaque métallique comportant sur chacune de ses faces un moyen de retenue, les moyens de retenue adjacents étant destinés à coopérer entre eux de manière à empêcher un déplacement relatif d'une plaque métallique par rapport aux éléments adjacents comprenant une plaque métallique ou un disque de court-circuit.

De préférence, le rotor comprend en outre des vis réparties dans les plaques métalliques comportant des lamages de manière à solidariser des plaques métalliques adjacentes, les têtes de vis étant logées dans les lamages.

Avantageusement, un isolant électrique est inséré entre le demi-arbre et le disque de court-circuit et/ou inséré entre les plaques métalliques.

De préférence, le rotor comprend en outre des barres insérées uniformément sur un même diamètre de la masse magnétique, le pion de retenue ou le pion de retenue amovible étant de forme polygonale et disposé au centre de la masse magnétique, le nombre de faces du polygone étant un multiple du nombre de barres et de tirants.

Avantageusement, les moyens de retenue sont disposés uniformément sur au moins un diamètre de la masse magnétique.

De préférence, les premier, deuxième et troisième moyens de retenue sont de différents types.

Selon un autre aspect, il est proposé une machine électrique tournante asynchrone à cage d'écureuil comprenant un rotor tel que défini précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- les figures 1 et 2, dont il a déjà été fait mention, illustrent un rotor comprenant un arbre non traversant d'une machine tournante électrique selon l'état de la technique ;
- la figure 3 illustre un mode de réalisation d'une machine électrique tournante asynchrone ;
- la figure 4 illustre une coupe selon une direction axiale d'un premier mode de réalisation du rotor ;
- la figure 5 illustre une coupe partielle selon une direction axiale d'un deuxième mode de réalisation du rotor ;
- la figure 6 illustre une coupe partielle selon une direction axiale d'un troisième mode de réalisation du rotor ;
- la figure 7 illustre une coupe partielle selon une direction axiale d'un quatrième mode de réalisation du rotor ;
- la figure 8 illustre une coupe partielle selon une direction axiale d'un cinquième mode de réalisation du rotor ;
- la figure 9 illustre une coupe partielle selon une direction axiale d'un sixième mode de réalisation du rotor ;
- la figure 10 illustre une coupe selon une direction axiale d'un septième mode de réalisation du rotor ;
- la figure 11 illustre une coupe selon une direction axiale d'un huitième mode de réalisation du rotor ;
- la figure 12 illustre une coupe partielle selon une direction axiale d'un neuvième mode de réalisation du rotor ;
- la figure 13 illustre une coupe partielle selon une direction axiale d'un dixième mode de réalisation du rotor ;
- la figure 14 illustre un mode de réalisation de plaques métalliques maintenues par des vis ;
- les figures 15 et 16 illustrent un onzième mode de réalisation du rotor ; et
- les figures 17 à 19 illustrent des modes de réalisation du disque de court-circuit.

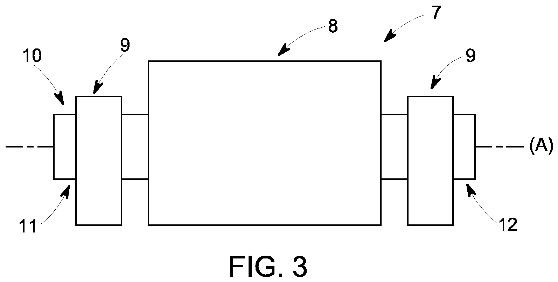

On se réfère à la figure 3 qui illustre un mode de réalisation d'une machine électrique tournante asynchrone 7 comprenant un stator 8, des paliers 9 et un rotor 10 inséré dans le stator 8 et les paliers 9.

Le rotor 10 comprend un arbre rotorique non traversant comprenant deux demi-arbres 11 et 12 et un axe (A) confondu avec l'axe de rotation du rotor 10.

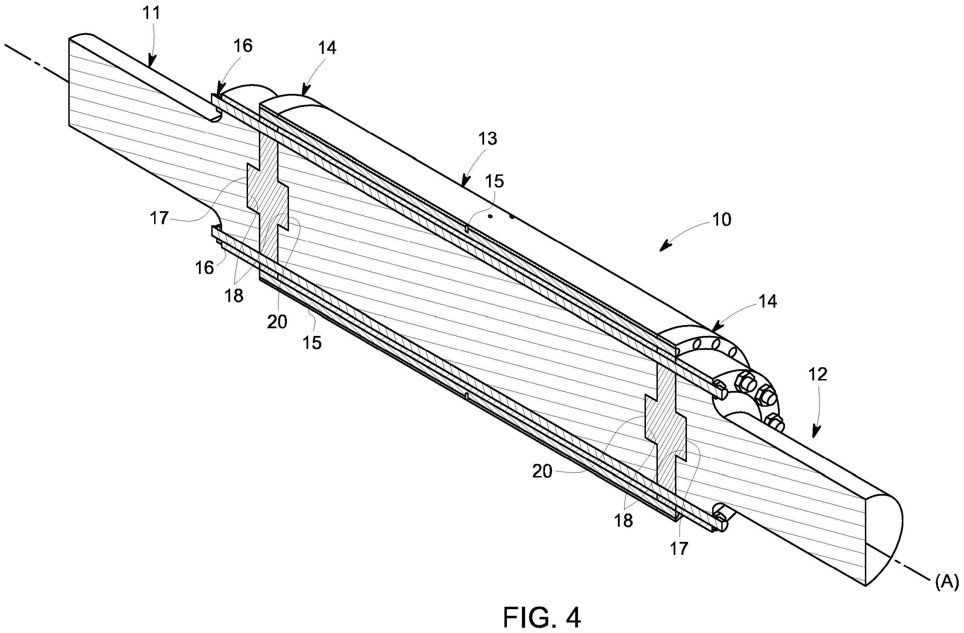

Comme visible sur la figure 4, le rotor 10 comprend en outre une masse magnétique 13, deux disques de court-circuit 14 intercalés chacun entre une extrémité de la masse magnétique 13 et un demi-arbre 11, 12.

Des barres 15 sont insérées uniformément sur un même diamètre dans la masse magnétique 13.

Les barres 15 et les disques de court-circuit 14 sont réalisés par exemple en cuivre et sont électriquement reliés entre eux pour former une cage d'écureuil.

Dans ce mode de réalisation, la masse magnétique 13 comprend un corps métallique monobloc réalisé par exemple en acier.

Des tirants 16 sont répartis uniformément sur un diamètre du rotor de manière à maintenir compactée la masse magnétique 13 et les disques de court-circuit 14 entre les deux demi-arbres 11 et 12.

Les extrémités des tirants 16 comportent un filetage afin de recevoir un écrou.

La masse magnétique 13, les disques de court-circuit 14 et les demi-arbres 11 et 12 comportent des trous de passage pour les tirants 16 qui sont dimensionnés de sorte que lors de l'échauffement du rotor, les tirants puissent se dilater sous l'effet de la chaleur, mais aussi de permettre l'insertion avec un jeu des tirants dans la masse magnétique.

Chaque demi-arbre 11 et 12 comprend au moins un premier moyen de retenue, chaque disque de court-circuit 14 comprend sur chacune de ses faces au moins un deuxième moyen de retenue et chaque extrémité de la masse magnétique comprend au moins un troisième moyen de retenue.

Les premier, deuxième et troisième moyens de retenue coopèrent entre eux de manière à empêcher un déplacement relatif d'un disque de court-circuit 14 par rapport aux demi-arbres 11 et 12 et par rapport à la masse magnétique 13.

Dans ce mode de réalisation, les premier, deuxième et troisième moyens de retenue sont disposés respectivement au centre du demi-arbre 11 et 12, au centre du disque de court-circuit 14, et au centre de la masse magnétique 13.

Les premier et troisième moyens de retenue comportent un lamage 17, 20 et le deuxième moyen de retenue comporte un pion 18 de retenue, les pions 18 et les lamages 17 et 20 sont dimensionnés de sorte que le pion 18 s'insère dans le lamage 17, 20 avec ou sans jeu.

Dans ce qui suit, les éléments identiques à ceux décrits précédemment sont identifiés par les mêmes références numériques.

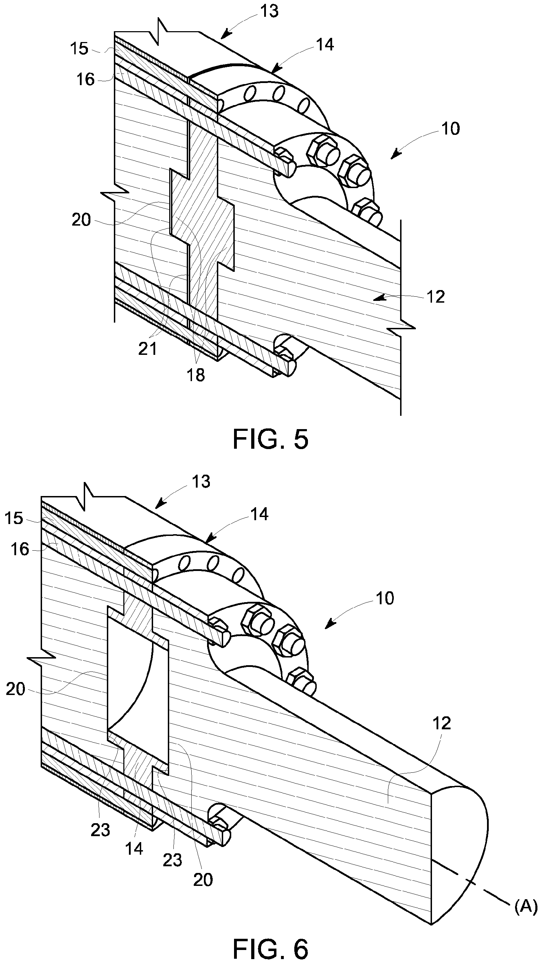

On se réfère à la figure 5 qui illustre une coupe partielle selon une direction axiale d'un deuxième mode de réalisation du rotor 10

On retrouve la masse magnétique 13, le disque de court-circuit 14, les barres 15, les tirants 16, les pions de retenue 18 et les lamages 20.

Dans ce mode de réalisation, un isolant électrique 21 sépare la masse magnétique 13 et le disque de court-circuit 14 sur une partie de leur surface de contact.

L'isolant électrique 21 est composé d'une couronne avec un trou en face de chaque pion 18 pour le passage du pion 18, et d'un disque en vis-à-vis de chaque pion 18.

En variante non représentée, l'isolant électrique est un vernis isolant déposé sur une tôle fine, par exemple en acier, la tôle fine comprenant une couronne et un disque en face de chaque pion 18 étant inséré entre la masse magnétique 13 et le disque de court-circuit 14.

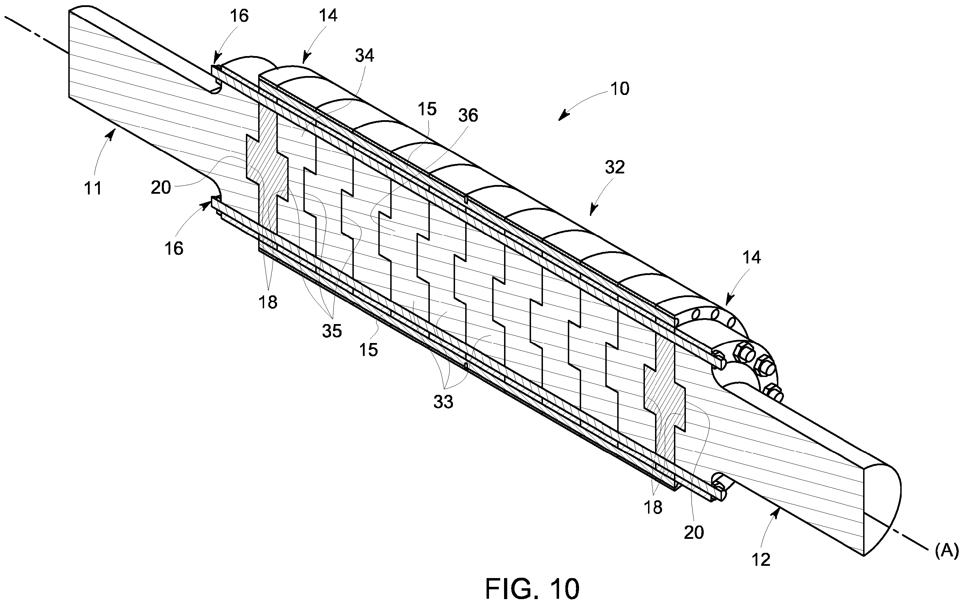

De même, en variante non représentée, l'isolant 21 comprenant une couronne isolante et un disque isolant en face de chaque pion 18, ou un vernis isolant déposé sur une tôle fine, est inséré entre chaque plaque métallique telles que représentées sur les figures 10 à 14, ce qui limite les courants de fuites en vue d'améliorer l'efficacité de la machine électrique tournante 7.

L'isolation électrique partielle entre la masse magnétique 13 et les disques de court-circuit 14 permet de diminuer les courants de fuite.

Par conséquent, l'échauffement du rotor 10 est diminué.

L'efficacité de la machine électrique tournante 7 est améliorée.

On se réfère à la figure 6 qui illustre une coupe partielle selon une direction axiale d'un troisième mode de réalisation du rotor 10.

On retrouve la masse magnétique 13, les barres 15, les tirants 16, les pions de retenue 23 et les lamages 20.

Dans ce mode de réalisation, le disque de court-circuit 14 est évidé en son centre et le deuxième moyen de retenue du disque de court-circuit 14 comprend un pion de retenue 23 évidé en son centre de manière à former deux collets de retenue destinés à s'insérer chacun avec ou sans jeu dans le lamage 20.

Ces évidements permettent de réduire la quantité de cuivre de manière à alléger la masse du rotor 10.

Cet allégement permet d'augmenter la valeur de la vitesse de rotation critique en flexion du rotor 10, ceci permettant d'augmenter la vitesse de fonctionnement de la machine électrique tournante 7 et par conséquent sa puissance électrique.

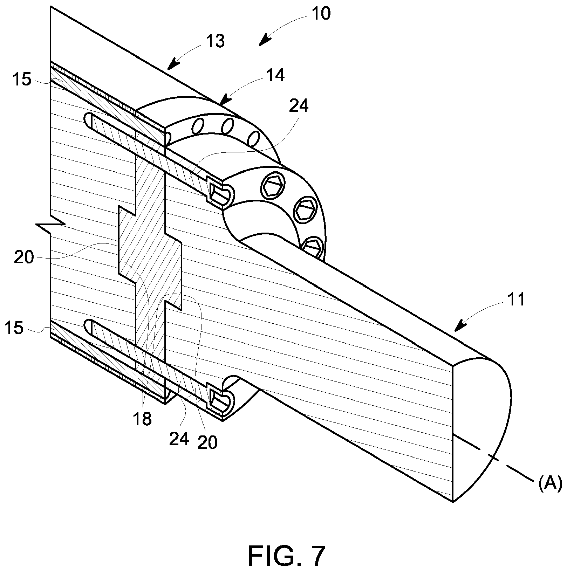

Selon un quatrième mode de réalisation du rotor 10, visible sur la figure 7, des vis 24 sont réparties uniformément sur un diamètre des demi-arbres 11 et 12 et passent à travers les disques de court-circuit 14.

Les vis 24 sont en prise dans la masse magnétique 13 de sorte que les demi-arbres 11 et 12 enserrent les disques de court-circuit 14 et la masse magnétique 13.

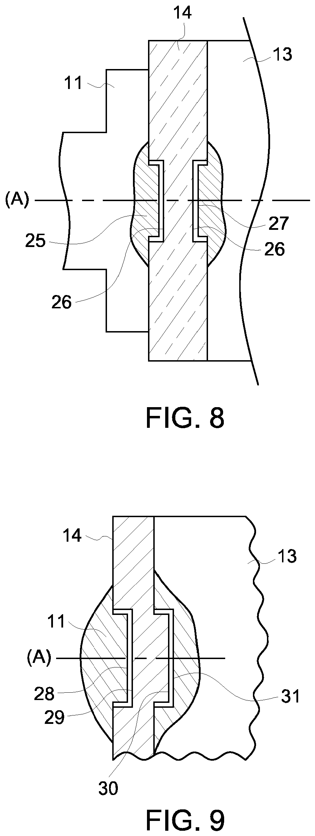

Selon un cinquième mode de réalisation (figure 8), le premier moyen de retenue et le troisième moyen de retenue comprennent chacun un pion de retenue 25 et 27, et le deuxième moyen de retenue comprend un lamage 26.

Les pions de retenue 25 et 27 et le lamage 26 sont dimensionnés de sorte que les pions de retenue s'emboîtent dans un lamage.

On se réfère à la figure 9 qui illustre un sixième mode de réalisation du rotor 10.

Dans ce mode de réalisation, le premier moyen de retenue comprend un pion de retenue 28, le troisième moyen de retenue comprend un lamage 31, le deuxième moyen de retenue d'une première face du disque de court-circuit comprend un lamage 29 et le deuxième moyen de retenue d'une deuxième face du disque de court circuit comprend un pion de retenue 30.

Le pion de retenue 28 du demi-arbre 11, le lamage 29 et le pion de retenue 30 du disque de court-circuit, et le lamage 31 de la masse magnétique 13 sont dimensionnés de sorte que les pions de retenue s'insèrent chacun dans un lamage avec ou sans jeu.

On se réfère à la figure 10 qui illustre une coupe selon une direction axiale d'un septième mode de réalisation du rotor 10.

On retrouve les demi-arbres 11 et 12 comprenant les lamages 20, les disques de court-circuit 14 comprenant les pions de retenue 18, les barres 15 et les tirants 16.

Le rotor 10 comprend une masse magnétique 32 comprenant un empilement de plaques métalliques 33 et 34.

La plaque métallique référencée 34 se situe à une des extrémités de la masse magnétique 32.

Chaque plaque métallique 33 et 34 comporte sur chacune de ses faces un moyen de retenue.

Les moyens de retenue de la plaque référencée 33 comprennent sur une première face de ladite plaque un lamage 35 et sur une deuxième face un pion de retenue 36 de sorte que le pion de retenue 36 s'insère avec ou sans jeu dans un lamage 35 adjacent ou de sorte que pour une plaque 33 se situant à l'extrémité de la masse magnétique 32 le pion de retenue 18 du disque de court-circuit 14 s'insère avec ou sans jeu dans un lamage 35 de ladite plaque 33.

Les moyens de retenue des première et deuxième faces de la plaque métallique étant aptes à coopérer avec ou sans jeu avec les moyens de retenue des plaques adjacentes de manière à empêcher un déplacement relatif de la plaque métallique par rapport aux plaques métalliques adjacentes 33, 34.

La plaque référencée 34 comprend sur chacune de ses faces un lamage 35 de sorte que le pion de retenue 18 et 36 s'insère avec ou sans jeu dans un lamage 35 adjacent.

La plaque référencée 34 comprend le troisième moyen de retenue coopérant avec le deuxième moyen de retenue du disque de court-circuit 14 comprenant le pion 18 de manière à empêcher un déplacement relatif de la plaque métallique référencée 34 par rapport à un élément adjacent comprenant la plaque métallique référencée 33 ou le disque de court-circuit 14.

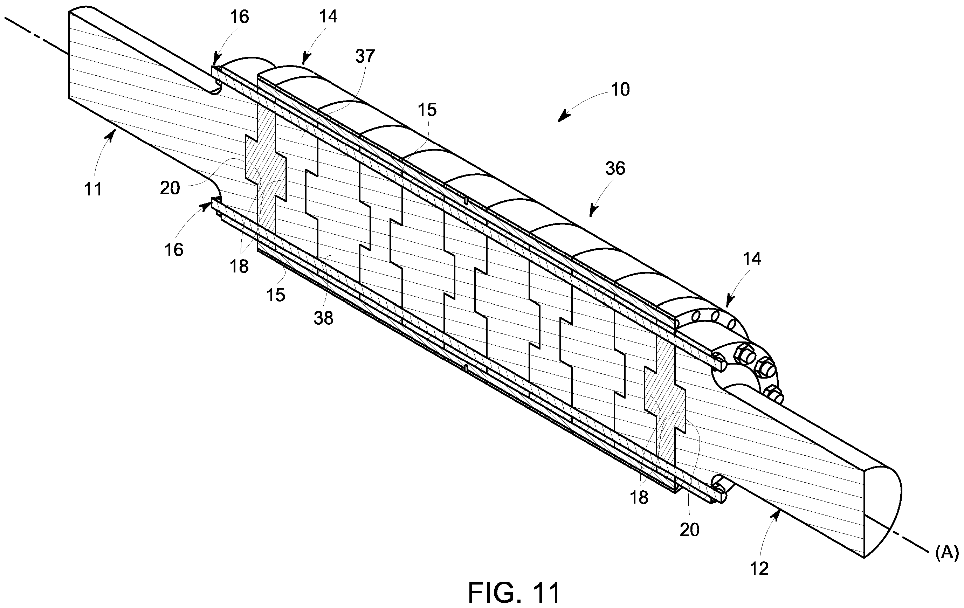

Selon un huitième mode de réalisation du rotor 10, visible sur la figure 11, sur laquelle on retrouve les demi-arbres 11 et 12 comprenant les lamages 20, les disques de court-circuit 14 comprenant les pions de retenue 18, les barres 15 et les tirants 16, le rotor 10 comprend une masse magnétique 36 comprenant un empilement de plaques métalliques 37 et 38, en alternance.

Les plaques métalliques 37 et 38 comportent chacune sur leur première et deuxième face un moyen de retenue identique.

Le moyen de retenue des plaques référencées 37 comporte un lamage sur chaque face et le moyen de retenue des plaques référencées 38 comporte un pion sur chaque face.

Les plaques référencées 37 et 38 sont empilées alternativement de sorte qu'un pion s'insère avec ou sans jeu dans un lamage adjacent et de sorte que le troisième moyen de retenue des plaques 37 à l'extrémité de la masse magnétique coopèrent avec le deuxième moyen de retenue du disque de court-circuit 14 de manière à empêcher un déplacement relatif d'une plaque métallique par rapport à un élément adjacent comprenant une plaque métallique 37, 38 ou le disque de court-circuit 14.

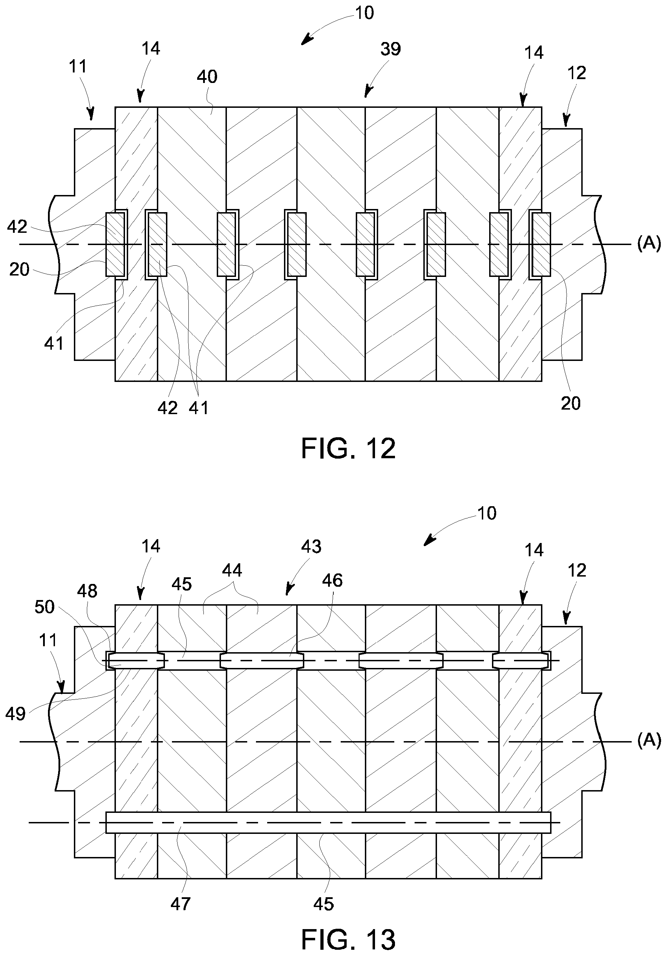

Dans le mode de réalisation de la figure 12 le rotor 10 comprend une masse magnétique 39 comprenant un empilement de plaques métalliques 40.

Chaque plaque métallique 40 comprend sur chacune de ses faces un moyen de retenue comprenant un lamage 41 accueillant avec ou sans jeu un pion de retenue amovible 42 de manière à empêcher un déplacement relatif de la plaque métallique par rapport aux plaques métalliques adjacentes.

Les plaque 40 situées aux extrémités de la masse magnétique 39 comprennent chacune le troisième moyen de retenue coopérant avec le deuxième moyen de retenue du disque de court-circuit 14 de manière à empêcher un déplacement relatif de la plaque métallique par rapport à au disque de court-circuit 14.

Dans ce mode de réalisation, les premier, deuxième et troisième moyens de retenue comprennent chacun un lamage identique au lamage 41 accueillant un pion de retenue amovible 42.

Le pion de retenue amovible 42 peut si il est solidarisé sur une face ou les deux faces d'une plaque métallique40 être collé sur la plaque ou fretté dans le lamage 41 de la plaque. Si le pion est fretté, l'écart de température nécessaire au frettage est obtenu soit en chauffant la plaque ou de préférence en refroidissant le pion amovible comme par exemple en plongeant le pion dans de l'azote liquide.

Selon d'autres modes de réalisation, le premier, le deuxième et le troisième moyens de retenue peuvent être de différents types.

On se réfère à la figure 13 qui illustre une coupe partielle selon une direction axiale d'un dixième mode de réalisation du rotor 10.

Dans ce mode de réalisation, le rotor 10 comprend une masse magnétique 43 comprenant un empilement de plaques métalliques 44.

Chaque plaque métallique 44 comprend des trous traversant 45 de sorte que chaque trou 45 coopère avec ou sans jeu avec un pion de retenue amovible 46 de manière à empêcher un déplacement relatif d'une plaque métallique 44 par rapport aux plaques métalliques adjacentes.

Les plaques 44 situées aux extrémités de la masse magnétique 43 comprennent chacune le troisième moyen de retenue comprenant un trou 45 coopérant avec le deuxième moyen de retenue du disque de court-circuit 14 de manière à empêcher un déplacement relatif de la plaque métallique par rapport à au disque de court-circuit 14.

Dans ce mode de réalisation, le premier moyen de retenue comprend un trou borgne 48, le deuxième moyen de retenue comprend un trou 49 de sorte que le disque de court-circuit 14 soit traversé par le trou 49, un pion de retenue amovible 50 s'insérant avec ou sans jeu dans les trous référencés 45, 48 et 49.

Selon d'autres modes de réalisation, les premier, deuxième et troisième moyens de retenue peuvent être de différents types.

Selon un autre mode de réalisation, les pions de retenue référencés 46 et 50 sont remplacés par une tige 47 s'insérant avec ou sans jeu dans les trous 45, 49 et se logeant dans les trous borgnes 48.

Dans les modes de réalisation du rotor 10 comportant des plaques métalliques décrits précédemment, les plaques métalliques sont maintenues dans la direction axiale (A) par les tirants.

En variante, les plaques métalliques sont vissées entre elles.

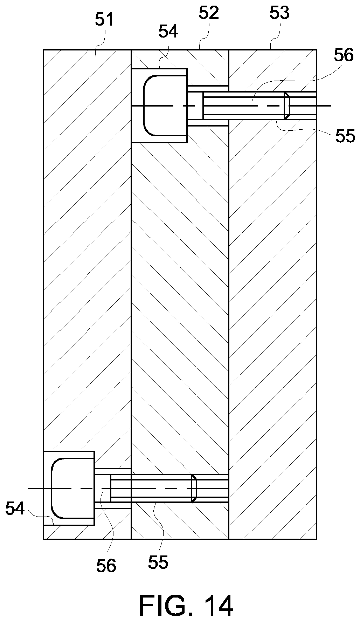

Comme visible sur la figure 14 les plaques métalliques 51, 52 et 53 peuvent être maintenues par des vis.

Dans ce cas, les plaques 51 et 52 comportent chacune un lamage 54 afin d'incruster la tête de vis 56 dans l'épaisseur de la plaque et les plaques 52 et 53 comportent chacune un taraudage 55.

Des vis 56 solidarisent les plaques 51, 52 et 53 entre elles en se vissant dans les taraudages 55.

Le nombre et l'emplacement des vis sont déterminés de sorte qu'une plaque métallique ne se déplace pas relativement aux autres plaques métalliques lorsque le rotor 10 est animé d'un mouvement de rotation et soumis à un couple ou un surcouple appliqué sur ses demi-arbres.

Chaque plaque 51, 52, 53 comporte alternativement des lamages 54 pour le passage de vis 56 et des taraudages 55 coopérant avec la partie filetée des vis 56. Ainsi chaque plaque est fixée par vis et solidaire des plaques adjacentes.

En variante non représentée, les plaques métalliques sont solidarisées par compactage avec des tirants reliant les deux plaques situées aux extrémités de la masse magnétique, les plaques ayant des trous de passage des tirants, et les deux plaques d'extrémité comportant des lamages pour recevoir les écrous aux extrémités des tirants, ou une des deux plaques comportant des trous taraudés recevant l'extrémité filetée des tirants. Puis la masse magnétique est fixée par vis aux demi-arbres comme illustré sur la figure 7.

Dans les modes de réalisation du rotor 10 comportant des plaques métalliques décrits précédemment, les plaques métalliques peuvent être de même épaisseur ou d'épaisseurs différentes.

L'épaisseur des plaques métalliques est choisie de sorte qu'elle soit supérieure à 40% de l'épaisseur du disque de court-circuit 14 et supérieure à 5% du diamètre extérieur du rotor 10, de préférence de 15 à 60% du diamètre extérieur du rotor.

Selon d'autres modes de réalisation, des moyens de retenue sont disposés uniformément sur au moins un diamètre de la masse magnétique.

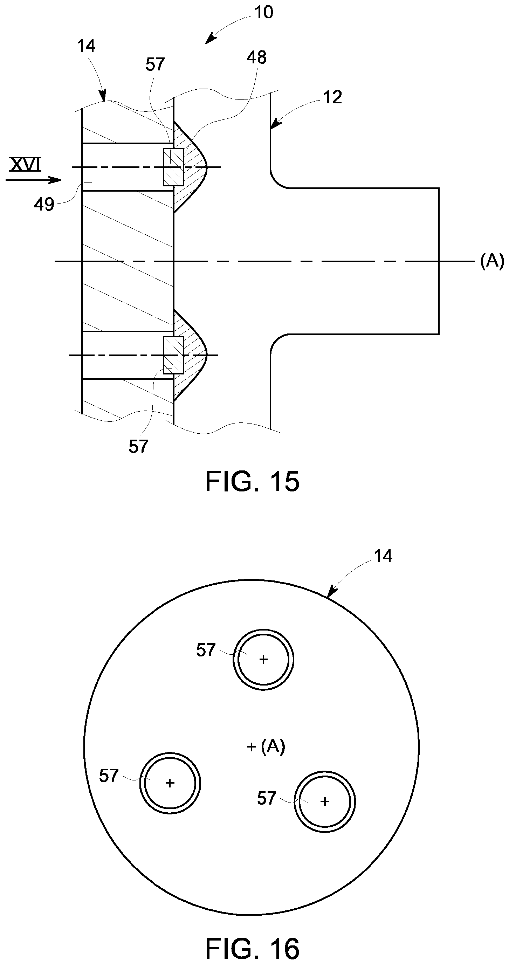

Les figures 15 et 16 illustrent une coupe partielle selon une direction axiale d'un onzième mode de réalisation du rotor 10 et une vue de face du disque de court-circuit 14 selon la direction XVI.

On retrouve le demi-arbre 12 comprenant les trous borgnes 48, le disque de court-circuit 14 comprenant les trous traversant 49 et des pions de retenue amovibles 57.

Dans ce mode de réalisation, les trois pions de retenue amovibles 57 sont cylindriques et sont disposés sur un même diamètre du disque de court-circuit 14, on peut également en variantes non représentées avoir 2, 4, 5 et plus pions de retenue usinés dans les demi-arbres ou plaques métalliques ou disques de court-circuit ou pions amovibles, sensiblement répartis uniformément sur un même diamètre, ou sur deux ou plusieurs rangs avec deux ou plusieurs diamètres concentriques.

Les pions de retenue et les pions de retenue amovibles peuvent être par exemple circulaire de forme cylindrique ou conique, carrée, en losange, triangulaire, trapézoïdale, carrée surmonté d'un triangle, polygonal.

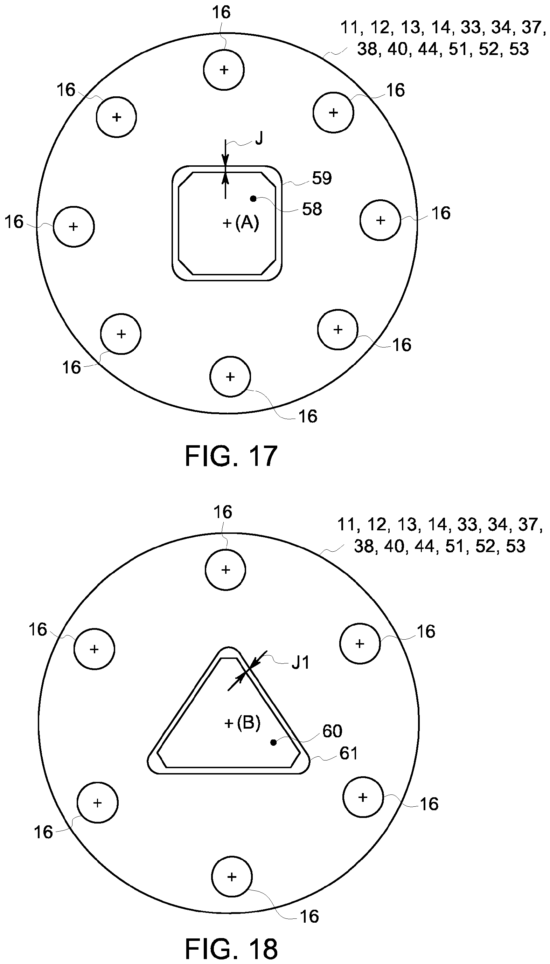

Les figures 17 et 18 illustrent une vue de face du disque de court-circuit 14 comprenant le deuxième moyen de retenue en son centre, ou une vue de face d'un demi-arbre 11, 12 ou d'une plaque métallique 13, 33, 34, 37, 38, 40, 44, 51, 52, 53 de la masse magnétique.

La figure 17 illustre par exemple le premier moyen de retenue comprenant un pion de retenue usiné ou amovible carré 58 et le deuxième moyen de retenue comprenant un trou carré 59 accueillant avec ou sans jeu J le pion de retenue 58.

Les tirants 16 traversent les disques de court-circuit 14, les demi-arbres ou plaques métalliques.

Le nombre de faces du pion 58 est un multiple du nombre de barres de cuivre 15 non représentées sur la figure 17 et de tirants 16 permettant ainsi plusieurs positions angulaires du demi-arbre ou disque de court-circuit ou plaques métalliques, lors de l'empilage et de la fabrication du rotor. Comme illustré sur la figure 17, un pion carré à quatre faces est un multiple de huit tirants, ou comme illustré sur la figure 18, un pion triangulaire à trois faces est multiple et compatible avec six tirants.

Avantageusement, cette configuration permet d'éviter d'utiliser des détrompeurs lors du montage du rotor.

De plus un tel pion de retenue, usiné ou amovible, permet de transmettre un couple important entre le disque de court-circuit 14 et le demi-arbre, ou entre plaques métalliques, par les faces du polygone.

Selon un autre mode de réalisation, le pion de retenue amovible ou usiné peut être un polygone non symétrique comme par exemple un carré surmonté d'un triangle, permettant de l'utiliser comme détrompeur ainsi qu'une position angulaire unique si nécessaire du demi-arbre, ou disque de court-circuit, ou plaques métalliques.

La force de compactage des tirants peut être réduite car le couple ne transite plus que par les surfaces des plaques en contact. Ainsi, le nombre de tirants peut être réduit ou la section des tirants peut être réduite dans le cas d'un rotor comprenant des tirants.

Avantageusement, des pions de retenue de forme polygonale permettent au rotor de transmettre un couple bien plus élevé qu'une transmission de couple par adhérence entre éléments adjacents comme les demi-arbres, les disques de court-circuit ou les plaques métalliques.

La figure 18 illustre le premier moyen de retenue comprenant un pion triangulaire 60 usiné ou amovible, et le deuxième ou troisième moyen de retenue correspondant comprenant un trou triangulaire 61 accueillant avec ou sans jeu J1 le pion 60, et les tirants 16.

Le nombre de faces du pion 60 est un multiple du nombre de tirants 16 et des barres de cuivre 15 non représentées sur la figure 18.

En variante non représentée sur les figures 4 à 6, 10 et 11, une extrémité filetée des tirants 16 est vissée dans un trou taraudé du demi-arbre 11 ou 12, et l'autre extrémité des tirants traverse un trou dans le demi-arbre 12 ou 11 pour accueillir un écrou.

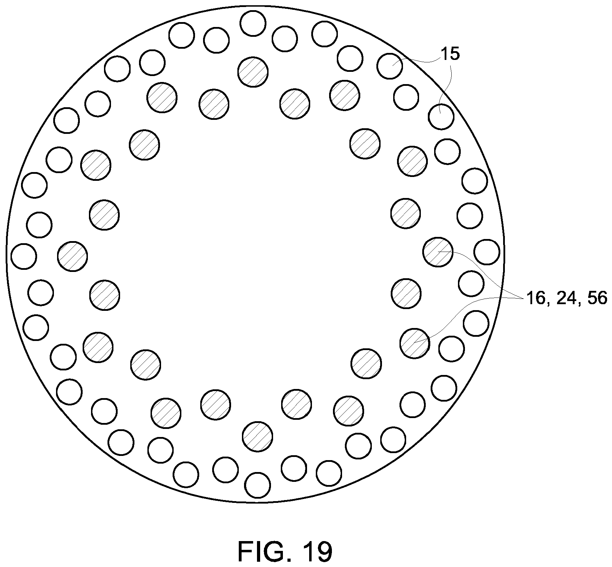

La figure 19 illustre une variante de réalisation avec deux ou plusieurs rangées de barres de cuivre 15 disposées sur deux ou plusieurs diamètres sensiblement concentriques, ou deux ou plusieurs rangées de tirants 16 ou vis de fixation 24, 56 disposés sur deux ou plusieurs diamètres sensiblement concentriques.

En variantes non représentées, les barres 15 sont de forme rectangulaires, rectangulaires à bords arrondis ou de forme oblongue.

Les barres 15 sont de préférence en cuivre ou en cuivre allié mais peuvent aussi être en aluminium, aluminium allié ou tout autre matériau conducteur électrique.

## Revendications

1. Rotor pour machine électrique asynchrone à arbre non traversant comprenant deux demi-arbres (11, 12) enserrant une masse magnétique cylindrique (13) et deux disques de court-circuit (14) intercalés chacun entre un demi-arbre et une des extrémités de la masse magnétique cylindrique, chaque demi-arbre comprenant au moins un premier moyen de retenue, chaque disque de court-circuit comprend sur chacune de ses faces au moins un deuxième moyen de retenue et chaque extrémité de la masse magnétique comprend au moins un troisième moyen de retenue, les premier, deuxième et troisième moyens de retenue coopérant entre eux de manière à empêcher un déplacement relatif des disques de court-circuit par rapport aux demi-arbres et par rapport à la masse magnétique, **caractérisé en ce que** :
le premier moyen de retenue et le troisième moyen de retenue comprennent chacun un lamage (17, 20) et le deuxième moyen de retenue comprend un pion de retenue (18) destiné à s'insérer dans le lamage, ou
le premier moyen de retenue et le troisième moyen de retenue comprennent chacun un pion de retenue (25, 27) et le deuxième moyen de retenue comprend un lamage (26) destiné à accueillir le pion de retenue, ou
le premier moyen de retenue comprend un pion de retenue (28), le troisième moyen de retenue comprend un lamage (31), le deuxième moyen de retenue d'une première face du disque de court-circuit comprend un lamage (29) et le deuxième moyen de retenue d'une deuxième face du disque de court-circuit comprend un pion de retenue (30) de sorte que chaque pion de retenue s'insère dans un lamage adjacent, ou
le premier, le deuxième et le troisième moyen de retenue comprennent chacun un lamage (41) coopérant avec des pions de retenue amovible, ou
le premier moyen de retenue comprend un trou borgne (48) pratiqué dans le demi-arbre, le deuxième moyen de retenue comprend un trou (49) pratiqué dans le disque de court-circuit (14) de sorte que le disque de court-circuit soit traversé par le trou et le troisième moyen de retenue comprend un trou (45) pratiqué dans la masse magnétique (43) de sorte que la masse magnétique soit traversée par le trou, un pion de retenue amovible s'insérant avec ou sans jeu dans les trous.

2. Rotor selon la revendication 1 comportant en outre des tirants (16) répartis uniformément sur au moins un diamètre du rotor (10) de manière à maintenir compacté la masse magnétique (13) et les disques de court-circuit (14) entre les demi-arbres (11, 12).

3. Rotor selon la revendication 1 comportant en outre des vis (24) réparties uniformément sur un diamètre des demi-arbres (11, 12) passant à travers les disques de court-circuit (14) et en prise dans la masse magnétique de sorte que les demi-arbres enserrent les disques de court-circuit et la masse magnétique (13).

4. Rotor selon la revendication 1 à 3, dans lequel les premier, deuxième et troisième moyens de retenue sont disposés au centre du disque de court-circuit (14), du demi-arbre (11, 12) et de la masse magnétique (13).

5. Rotor selon la revendication 1 à 3, dans lequel les premier, deuxième et troisième moyens de retenue sont disposés uniformément ou sensiblement répartis de manière uniforme sur un même diamètre du disque de court-circuit (14), du demi-arbre (11, 12) et de la masse magnétique (13).

6. Rotor selon la revendication 1, dans lequel si le premier moyen de retenue et le troisième moyen de retenue comprennent chacun le lamage (17, 20) et le deuxième moyen de retenue comprend le pion de retenue, le disque de court-circuit (14) et le pion de retenue (23) sont évidés en leur centre.

7. Rotor selon l'une des revendications 1 à 6, dans lequel le pion de retenue ou le pion de retenue amovible est circulaire de forme cylindrique ou conique, ou polygonal, de préférence carré, triangulaire ou carré surmonté d'un triangle.

8. Rotor selon l'une des revendications 1 à 7, dans lequel la masse magnétique (13) comprend un corps métallique monobloc.

9. Rotor selon l'une des revendications 1 à 7, dans lequel la masse magnétique (13) comprend un empilement de plaques métalliques (33, 34, 37, 38, 40, 44, 51, 52, 53) chaque plaque métallique comportant sur chacune de ses faces un moyen de retenue, les moyens de retenue adjacents étant destinés à coopérer entre eux de manière à empêcher un déplacement relatif d'une plaque métallique par rapport aux éléments adjacents comprenant une plaque métallique (33, 34, 37, 38, 40, 44, 51, 52, 53) ou un disque de court-circuit (14).

10. Rotor selon la revendication 9, comprenant en outre des vis (56) réparties dans les plaques métalliques (51, 52, 53) comportant des lamages (54) de manière à solidariser des plaques métalliques adjacentes, les têtes de vis étant logées dans les lamages.

11. Rotor selon l'une quelconque des revendications 1 à 10, dans lequel un isolant électrique (21) est inséré entre le demi-arbre (11, 12) et le disque de court-circuit (14) et/ou inséré entre les plaques métalliques.

12. Rotor selon l'une quelconque des revendications 1 à 11, comprenant en outre des barres (15) insérées uniformément sur un même diamètre de la masse magnétique, le pion de retenue (58, 60) ou le pion de retenue amovible (58, 60) étant de forme polygonale et disposé au centre de la masse magnétique (13), le nombre de faces du polygone étant un multiple du nombre de barres (15) et de tirants (16).

13. Rotor selon l'une quelconque des revendications 1 à 11, dans lequel des moyens de retenue sont disposés uniformément sur au moins un diamètre de la masse magnétique.

14. Rotor selon l'une des revendications 1 à 13, dans lequel les premier, deuxième et troisième moyens de retenue sont de différents types.

15. Machine électrique tournante asynchrone à cage d'écureuil comprenant un rotor selon l'une quelconque des revendications précédentes.

## Patentansprüche

1. Rotor für eine asynchrone elektrische Maschine mit nicht-durchgehender Welle die zwei Halbwellen (11, 12) umfasst, die eine zylindrische magnetische Masse (13) einspannen, und zwei Kurzschlussscheiben (14), die jeweils zwischen einer Halbwelle und einem Ende der zylindrischen magnetischen Masse positioniert sind, wobei jede Halbwelle mindestens ein erstes Rückhaltemittel umfasst, jede Kurzschlussscheibe auf jeder ihrer Seiten mindestens ein zweites Rückhaltemittel umfasst und jedes Ende der magnetischen Masse mindestens ein drittes Rückhaltemittel umfasst, wobei die ersten, zweiten und dritten Rückhaltemittel unter sich zusammenwirken, um eine relative Verschiebung der Kurzschlussscheiben in Bezug auf die Halbwellen und in Bezug auf die magnetische Masse zu verhindern, **dadurch gekennzeichnet, dass**:
das erste Rückhaltemittel und das dritte Rückhaltemittel jeweils eine Senkung (17, 20) umfassen, und das zweite Rückhaltemittel einen Rückhaltestift (18) umfasst, der bestimmt ist, um sich in die Senkung einzufügen, oder
das erste Rückhaltemittel und das dritte Rückhaltemittel jeweils einen Rückhaltestift (25, 27) umfassen, und das zweite Rückhaltemittel eine Senkung (26) umfasst, die bestimmt ist, um den Rückhaltestift aufzunehmen, oder
das erste Rückhaltemittel einen Rückhaltestift (28) umfasst, das dritte Rückhaltemittel eine Senkung (31) umfasst, das zweite Rückhaltemittel einer ersten Seite der Kurzschlussscheibe eine Senkung (29) umfasst und das zweite Rückhaltemittel einer zweiten Seite der Kurzschlussscheibe einen Rückhaltestift (30) umfasst, so dass sich jeder Rückhaltestift in eine benachbarte Senkung einfügt, oder
das erste, das zweite und das dritte Rückhaltemittel jeweils eine Senkung (41) umfassen, die mit herausnehmbaren Rückhaltestiften zusammenwirken, oder
das erste Rückhaltemittel ein Sackloch (48) umfasst, das in der Halbwelle ausgeführt ist, das zweite Rückhaltemittel ein Loch (49) umfasst, das in der Kurzschlussscheibe (14) ausgeführt ist, so dass die Kurzschlussscheibe durch das Loch durchdrungen wird, und
das dritte Rückhaltemittel ein Loch (45) umfasst, das in der magnetischen Masse (43) ausgeführt ist, so dass die magnetische Masse durch das Loch durchdrungen wird, wobei sich ein herausnehmbarer Rückhaltestift mit oder ohne Spiel in die Löcher einfügt.

2. Rotor nach Anspruch 1, der ferner Spurstangen (16) beinhaltet, die gleichmäßig über mindestens einen Umfang des Rotors (10) verteilt sind, um die magnetische Masse (13) und die Kurzschlussscheiben (14) zwischen den Halbwellen (11, 12) kompakt zu halten.

3. Rotor nach Anspruch 1, ferner Schrauben (24) beinhaltend, die gleichmäßig über einen Umfang der Halbwellen (11, 12) verteilt sind und durch die Kurzschlussscheiben (14) verlaufen, und mit der magnetische Masse in Eingriff stehen, so dass die Halbwellen die Kurzschlussscheiben und die magnetische Masse (13) einspannen.

4. Rotor nach Anspruch 1 bis 3, wobei die ersten, zweiten und dritten Rückhaltemittel im Zentrum der Kurzschlussscheibe (14), der Halbwelle (11, 12) und der magnetischen Masse (13) angeordnet sind.

5. Rotor nach Anspruch 1 bis 3, wobei die ersten, zweiten und dritten Rückhaltemittel gleichmäßig angeordnet sind oder im Wesentlichen gleichmäßig verteilt sind über denselben Umfang der Kurzschlussscheibe (14), der Halbwelle (11, 12) und der magnetischen Masse (13).

6. Rotor nach Anspruch 1, wobei, wenn das erste Rückhaltemittel und das dritte Rückhaltemittel jeweils die Senkung (17, 20) umfassen, und das zweite Rückhaltemittel den Rückhaltestift umfasst, die Kurzschlussscheibe (14) und der Rückhaltestift (23) in ihrem Zentrum ausgespart sind.

7. Rotor nach einem der Ansprüche 1 bis 6, wobei der Rückhaltestift oder der herausnehmbare Rückhaltestift kreisförmig zylindrisch oder konisch oder polygonal ist, vorzugsweise quadratisch, dreieckig oder quadratisch und von einem Dreieck überragt.

8. Rotor nach einem der Ansprüche 1 bis 7, wobei die magnetische Masse (13) einen einteiligen Metallkörper umfasst.

9. Rotor nach einem der Ansprüche 1 bis 7, wobei die magnetische Masse (13) einen Stapel von Metallplatten (33, 34, 37, 38, 40, 44, 51, 52, 53) umfasst, wobei jede Metallplatte auf jeder ihrer Seiten ein Rückhaltemittel beinhaltet, wobei die benachbarten Rückhaltemittel bestimmt sind, um miteinander so zusammenzuwirken, dass eine relative Verschiebung einer Metallplatte in Bezug auf benachbarte Elemente, die eine Metallplatte (33, 34, 37, 38, 40, 44, 51, 52, 53) oder eine Kurzschlussscheibe (14) umfassen, verhindert wird.

10. Rotor nach Anspruch 9, ferner Schrauben (56) umfassend, die in den Metallplatten (51, 52, 53) verteilt sind, die Senkungen (54) beinhalten, um benachbarte Metallplatten zu verbinden, wobei die Schraubenköpfe in den Senkungen untergebracht sind.

11. Rotor nach einem der Ansprüche 1 bis 10, wobei ein elektrischer Isolator (21) zwischen der Halbwelle (11, 12) und der Kurzschlussscheibe (14) eingefügt ist und/oder zwischen den Metallplatten eingefügt ist.

12. Rotor nach einem der Ansprüche 1 bis 11, ferner Stäbe (15) umfassend, die gleichmäßig auf demselben Umfang der magnetischen Masse eingefügt sind, wobei der Rückhaltestift (58, 60) oder der herausnehmbare Rückhaltestift (58, 60) polygonförmig ist und im Zentrum der magnetischen Masse (13) angeordnet ist, wobei die Anzahl der Seiten des Polygons ein Vielfaches der Anzahl der Stäbe (15) und Spurstangen (16) ist.

13. Rotor nach einem der Ansprüche 1 bis 11, wobei die Rückhaltemittel gleichmäßig über mindestens einen Umfang der magnetischen Masse angeordnet sind.

14. Rotor nach einem der Ansprüche 1 bis 13, wobei die ersten, zweiten und dritten Rückhaltemittel unterschiedlicher Art sind.

15. Asynchrone rotierende elektrische Maschine mit einem Käfigläufer, die einen Rotor nach einem der vorhergehenden Ansprüche umfasst.

## Claims

1. A rotor for an asynchronous electric machine with nonthrough shaft comprising two half-shafts (11, 12) enclosing a cylindrical magnetic mass (13) and two short-circuit disks (14) each interposed between a half-shaft and one of the ends of the cylindrical magnetic mass, each half-shaft comprising at least one first retaining means, each short-circuit disk comprises on each of its faces at least one second retaining means and each end of the magnetic mass comprises at least one third retaining means, the first, second and third retaining means cooperating with each other so as to prevent relative movement of the short-circuit disks with respect to the half-shafts and with respect to the magnetic mass, **characterised in that**:
the first retaining means and the third retaining means each comprise a countersink (17, 20) and the second retaining means comprises a retaining pin (18) intended to be inserted into the countersink, or
the first retaining means and the third retaining means each comprise a retaining pin (25, 27) and the second retaining means comprises a countersink (26) intended to accommodate the retaining pin, or
the first retaining means comprises a retaining pin (28), the third retaining means comprises a countersink (31), the second retaining means of a first face of the short-circuit disk comprises a countersink (29) and the second retaining means of a second face of the short-circuit disk comprises a retaining pin (30) so that each retaining pin is inserted into an adjacent countersink, or
the first, second and third retaining means each comprise a countersink (41) cooperating with removable retaining pins, or
the first retaining means comprises a blind hole (48) made in the half-shaft, the second retaining means comprises a hole (49) made in the short-circuit disk (14) so that the short-circuit disk is traversed by the hole and the third retaining means comprises a hole (45) made in the magnetic mass (43) so that the magnetic mass is traversed by the hole, a removable retaining pin being inserted with or without clearance into the holes.

2. The rotor according to claim 1 further including tie rods (16) uniformly distributed over at least one diameter of the rotor (10) so as to keep the magnetic mass (13) and the short-circuit disks (14) compacted between the half-shafts (11, 12) .

3. The rotor according to claim 1 further including screws (24) uniformly distributed over a diameter of the half-shafts (11, 12) passing through the short-circuit disks (14) and engaging in the magnetic mass so that the half-shafts enclose the short-circuit disks and the magnetic mass (13).

4. The rotor according to claim 1 to 3, wherein the first, second and third retaining means are disposed in the centre of the short-circuit disk (14), the half-shaft (11, 12) and the magnetic mass (13).

5. The rotor according to claim 1 to 3, wherein the first, second and third retaining means are disposed uniformly or substantially distributed in a uniform manner over the same diameter of the short-circuit disk (14), the half-shaft (11, 12) and the magnetic mass (13).

6. The rotor according to claim 1, wherein if the first retaining means and the third retaining means each comprise the countersink (17, 20) and the second retaining means comprises the retaining pin, the short-circuit disk (14) and the retaining pin (23) are hollowed out in their centre.

7. The rotor according to one of claims 1 to 6, wherein the retaining pin or the removable retaining pin is circular of cylindrical or conical shape, or polygonal, preferably square, triangular or square surmounted by a triangle.

8. The rotor according to one of claims 1 to 7, wherein the magnetic mass (13) comprises a one-piece metal body.

9. The rotor according to one of claims 1 to 7, wherein the magnetic mass (13) comprises a stack of metal plates (33, 34, 37, 38, 40, 44, 51, 52, 53) each metal plate including on each of its faces a retaining means, the adjacent retaining means being intended to cooperate with each other so as to prevent relative movement of a metal plate relative to adjacent elements comprising a metal plate (33, 34, 37, 38, 40, 44, 51, 52, 53) or a short-circuit disk (14).

10. The rotor according to claim 9, further comprising screws (56) distributed in the metal plates (51, 52, 53) including countersinks (54) so as to secure adjacent metal plates, the screw heads being housed in the countersinks.

11. The rotor according to any one of claims 1 to 10, wherein an electrical insulator (21) is inserted between the half-shaft (11, 12) and the short-circuit disk (14) and/or inserted between the metal plates.

12. The rotor according to any one of claims 1 to 11, further comprising bars (15) inserted uniformly on the same diameter of the magnetic mass, the retaining pin (58, 60) or the removable retaining pin (58, 60) being of polygonal shape and disposed in the centre of the magnetic mass (13), the number of faces of the polygon being a multiple of the number of bars (15) and tie rods (16).

13. The rotor according to any one of claims 1 to 11, wherein retaining means are disposed uniformly over at least one diameter of the magnetic mass.

14. The rotor according to one of claims 1 to 13, wherein the first, second and third retaining means are of different types.

15. An asynchronous rotating electric machine with a squirrel cage comprising a rotor according to any one of the preceding claims.
